# EUROPEAN PATENT APPLICATION

(11) **EP 4 715 567 A1**
(43) Date of publication of application: **25.03.2026**
(21) Application number: 25198894.5
(22) Date of filing: 29.08.2025
(51) Int. Cl.: G06F 3/16, G06F 1/16, G06F 3/04817, G06F 3/0482, G06F 3/04842, G06F 3/04847, G06F 3/14, G06F 13/38

(54) **METHOD, INFORMATION PROCESSING SYSTEM, AND INFORMATION PROCESSING PROGRAM**

(30) Priority: 18.09.2024 JP 2024160930
(71) Applicant: Nintendo Co., Ltd., Kyoto 601-8501 (JP)
(72) Inventor: MATSUMOTO, Tatsuya, Kyoto, 601-8501 (JP); ONISHI, Masato, Kyoto, 601-8501 (JP)
(74) Representative: Bardehle Pagenberg Partnerschaft mbB Patentanwälte Rechtsanwälte

(57) **Abstract**

A method to be performed in an information processing system including an interface to and from which a device configured to output or input a signal of at least one of a sound or video images is connectable and disconnectable, is provided. The method includes setting as a priority group, based on a user operation, one group including a plurality of devices to be connected through a wire to the information processing system, and selecting an input/output device configured to output or input the signal from among one or more devices connected to the information processing system. The selecting the input/output device includes selecting, when the one or more devices connected through the wire to the information processing system include one or more devices in the priority group, at least one of the one or more devices in the priority group as the input/output device.

## Description

The present disclosure relates to a method, an information processing system, and an information processing program.

### INTRODUCTION

For an information processing apparatus, for example, there may be a plurality of candidates for a sound output destination, such as a built-in speaker, an earphone jack, a monitor via a cradle, and a device connected via a universal serial bus (USB) (see, for example, Japanese Patent Laying-Open No. 2017-000757 and the like).

### SUMMARY

In connection or disconnection of an input/output device for input and output of a sound or video images, an input/output device intended by a user is desirably selected.

(Configuration 1) According to one embodiment, a method to be performed in an information processing system including an interface to and from which a device configured to output or input a signal of at least one of a sound or video images is connectable and disconnectable is provided. The method includes setting as a priority group, based on a user operation, one group including a plurality of devices to be connected through a wire to the information processing system, and selecting an input/output device configured to output or input the signal from among one or more devices connected to the information processing system. The selecting the input/output device includes selecting, when the one or more devices connected through the wire to the information processing system include one or more devices in the priority group, at least one of the one or more devices in the priority group as the input/output device.

According to Configuration 1, since an input/output device is selected from among various devices based on the priority group set based on the user operation, possibility of selection of the input/output device intended by the user can be higher.

(Configuration 2) In Configuration 1, the plurality of devices may be predetermined devices. According to Configuration 2, since the predetermined devices are set as the priority group, convenience of the user can be improved.

(Configuration 3) In Configuration 2, the plurality of devices may include a permanently connected device. According to Configuration 3, since at least the permanently connected device is included in the priority group, possibility of confusion of the user can be reduced.

(Configuration 4) In Configuration 2 or 3, the plurality of devices may include a device to be connected to a predetermined interface to and from which a device is connectable through a wire and disconnectable. According to Configuration 4, regardless of a device connected through the wire, the device connected through the wire to the predetermined interface is included in the priority group. Therefore, possibility of selection of the input/output device intended by the user can be higher.

(Configuration 5) In Configuration 4, the signal may be an audio signal. The predetermined interface may be a phone jack. According to Configuration 5, a device adapted to input and output of a sound, such as an earphone, a headphone, or a headset, is connected to the phone jack. Connection of a device to the phone jack leads to estimation that the user desires to use the connected device. By including the device connected to the phone jack in the priority group, possibility of selection of the input/output device intended by the user can be higher.

(Configuration 6) In Configuration 5, for the devices in the priority group, a priority level for selection may be set. For a device to be connected to the phone jack, a priority level highest within the priority group may be set. According to Configuration 6, when a device is connected to the phone jack, the highest priority level is set for the connected device, and hence the input/output device as intended by the user can be selected.

(Configuration 7) In Configuration 4, the signal may be an audio signal. The selecting the input/output device may select an input/output device configured to output the audio signal. The predetermined interface may be an HDMI^{®}. Output of a video signal in conformity with HDMI^{®} leads to estimation that the user expects not only display of video images by the device to which the video signal is outputted but also output of sound. According to Configuration 7, an input/output device as expected by the user can be selected.

(Configuration 8) In any of Configurations 1 to 7, the plurality of devices may include a device configured to be disconnected in accordance with a state of the information processing system. According to Configuration 8, since the device connected while the information processing system is in a specific state is included in the priority group, possibility of selection of the input/output device intended by the user can be higher.

(Configuration 9) In any of Configurations 1 to 8, the information processing system may be configured to show video images at a built-in display and a connected external display. The signal may be an audio signal. The selecting the input/output device may include selecting an input/output device configured to output the audio signal. The one group may include a built-in microphone and the external display. According to Configuration 9, whether video images are shown on any of the built-in display and the external display, the built-in microphone may be selected as the input/output device. The external display often does not include the microphone. Therefore, by selection of the built-in microphone as the input/output device, possibility of selection of the input/output device intended by the user can be higher.

(Configuration 10) In Configuration 9, when video images are shown on the external display, the selecting the input/output device may include selecting the external display preferentially to a built-in speaker. According to Configuration 10, the external display often includes the speaker. Therefore, by preferential selection of the external display, possibility of selection of the input/output device intended by the user can be higher.

(Configuration 11) In any of Configurations 1 to 10, for the devices in the priority group, a priority level within the priority group for selection may be set. According to Configuration 11, owing to setting of the priority level, possibility of selection as the input/output device, of the device intended by the user from among the plurality of devices included in the priority group can be higher.

(Configuration 12) In any of Configurations 1 to 11, the setting the one group as the priority group may include showing as an item selectable by a user, at least one device of the plurality of devices in the one group, and setting the one group as the priority group when the user selects the at least one device that is shown. According to Configuration 12, as a result of selection of at least one device by the user in a certain scene, in another scene, another device in a group to which the selected device belongs is selected unless the selected device is connected. Therefore, possibility of selection of the input/output device intended by the user can be higher.

(Configuration 13) In Configuration 12, the setting the one group as the priority group may include showing one device and not showing other one or more devices among the plurality of devices in the one group. According to Configuration 13, even when the plurality of devices are included in one group, only a single device included in the group is shown, so that confusion of the user can be reduced.

(Configuration 14) In any of Configurations 1 to 13, the setting the one group as the priority group may include causing a user to select a device configured to currently output or input the signal and setting a group including the selected device as the priority group. According to Configuration 14, since the priority group in accordance with selection of a device by the user can be set, possibility of selection of the input/output device intended by the user can be higher.

(Configuration 15) In any of Configurations 1 to 14, the selecting the input/output device may include selecting, when one or more devices are wirelessly connected to the information processing system, at least one of the one or more wirelessly connected devices as the input/output device, regardless of the device in the priority group. According to Configuration 15, possibility of selection of the input/output device intended by the user can be higher.

(Configuration 16) In Configuration 15, the device to wirelessly be connected to the information processing system may be one of a sound output destination, a sound input source, a video image output destination, and a video image input source. According to Configuration 16, user's intention can more reliably be reflected.

(Configuration 17) According to another embodiment, an information processing system configured to perform the method according to Configurations 1 to 16 is provided.

(Configuration 18) According to yet another embodiment, a program causing one or more computers to perform the method according to Configurations 1 to 16 is provided.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of an information processing system according to the present embodiment.
Figs. 2 and 3 each show an exemplary illustrative non-limiting drawing illustrating an exemplary flowchart showing an exemplary processing procedure in selection of an input/output device in an information processing apparatus according to the present embodiment.
Figs. 4A to 4C each show an exemplary illustrative non-limiting drawing illustrating an exemplary user interface screen involved with change of setting of the input/output device in the information processing apparatus according to the present embodiment.

### DETAILED DESCRIPTION

The present embodiment will be described in detail with reference to the drawings. The same or corresponding elements in the drawings have the same reference characters allotted and description thereof will not be repeated.

### [A. Exemplary System Configuration]

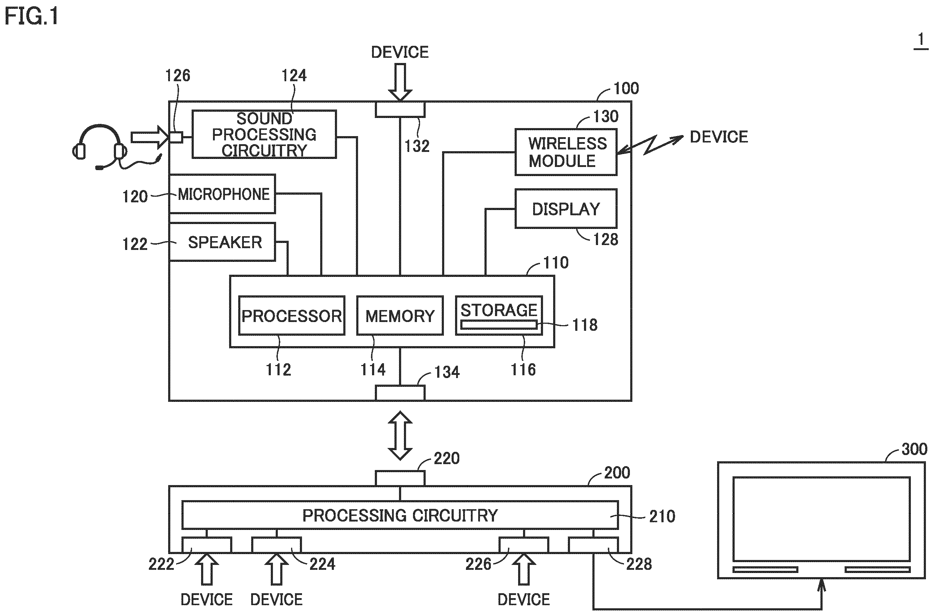

An exemplary configuration of an information processing system 1 according to the present embodiment will initially be described with reference to Fig. 1. Information processing system 1 includes an information processing apparatus 100.

Information processing apparatus 100 can perform at least one of sound output processing, sound input processing, video image output processing, and video image input processing. Information processing apparatus 100 may be a machine exclusive for games or a general-purpose computer such as a personal computer, a smartphone, or a tablet.

Information processing apparatus 100 may be placed in a cradle 200. Information processing system 1 may include cradle 200. A state in which information processing apparatus 100 is not placed in cradle 200 will be referred to as a "portable mode" below and a state in which information processing apparatus 100 is placed in cradle 200 will be referred to as a "stationary mode" below.

The "device" herein encompasses equipment available in information processing apparatus 100. The device can also be defined as encompassing equipment connected and connectable to information processing system 1. In the description below, the device is defined as being capable of at least one of output of an audio signal, input of an audio signal, output of a video signal, and/or input of a video signal. In other words, the device is capable of output or input of a signal of at least one of a sound or video images.

At least one of information processing apparatus 100 and cradle 200 includes an interface to and from which a device is connectable through a wire and disconnectable. In other words, at least one device is connectable through a wire to and disconnectable from at least one of information processing apparatus 100 and cradle 200. At least one device may permanently be connected to information processing system 1. The device permanently connected to information processing system 1 can also be regarded as an exemplary device connected through the wire to information processing system 1.

Information processing apparatus 100 includes processing circuitry 110, a microphone 120, a speaker 122, sound processing circuitry 124, a phone jack 126, a display 128, and USB ports 132 and 134.

Processing circuitry 110 performs various types of processing including processing which will be described later. Processing circuitry 110 includes, for example, one or more processors 112, one or more memories 114, and one or more storages 116.

Processor 112 includes, for example, a central processing unit (CPU), a graphics processing unit (GPU), or the like. Processor 112 develops a program (for example, an information processing program 118) stored in storage 116 on memory 114 and executes the same.

Memory 114 is a volatile storage medium accessible by processor 112, and it includes, for example, a dynamic random access memory (DRAM), a static random access memory (SRAM), or the like.

Storage 116 is a non-volatile storage medium accessible by processor 112, and it includes, for example, a flash memory, a hard disk, or the like. Storage 116 may include, for example, a storage medium attachable to and removable from information processing apparatus 100, such as a cartridge or an SD card. Information processing program 118 for performing processing as will be described later may be stored in storage 116.

The term "processor" herein encompasses at least processing circuitry that performs processing in accordance with a computer readable instruction, such as a CPU or a GPU, and hard-wired circuitry such as an application specific integrated circuit (ASIC) or a field programmable gate array (FPGA).

The term "memory" herein encompasses at least memory 114 and storage 116.

In information processing apparatus 100, a system on chip (SoC) in which functions of the processor, the memory, and the like are integrated may be adopted. In this case, the processor and the memory are located at the same SoC (integrated circuit). Therefore, the terms "processor" and "memory" herein encompass configurations independent of each other and an integrated configuration.

Microphone 120 is arranged at a housing or the like of information processing apparatus 100 and collects sounds to generate an audio signal. Microphone 120 can also be defined as a built-in microphone of information processing apparatus 100.

Speaker 122 is arranged at the housing or the like of information processing apparatus 100 and generates a sound from an audio signal. Speaker 122 can also be defined as a built-in speaker of information processing apparatus 100.

Sound processing circuitry 124 is electrically connected to phone jack 126. Sound processing circuitry 124 provides an audio signal (specifically, a signal for output of a sound) to a device (for example, an earphone, a headset, or the like) inserted in phone jack 126. Sound processing circuitry 124 may receive an audio signal (specifically, a signal representing a sound collected by the device) from a device (for example, a headset or the like) inserted in phone jack 126.

Phone jack 126 (and sound processing circuitry 124) is an interface for wired connection of the device.

Display 128 shows or outputs video images in accordance with a video signal generated by processing circuitry 110. Display 128 includes, for example, a liquid crystal display (LCD), an organic EL display, or the like. Display 128 is arranged to expose a display surface at a part of the housing of information processing apparatus 100. Display 128 can also be defined as a display embedded in information processing apparatus 100 or an integrated display of information processing apparatus 100.

Information processing apparatus 100 may further include one or more interfaces for wired connection of a device. For example, USB port 132 is used for wired connection between information processing apparatus 100 and one or more devices.

USB port 134 is used for connection between information processing apparatus 100 and cradle 200. Information processing apparatus 100 may receive supply of electric power from cradle 200 through USB port 134. Information processing apparatus 100 can also use a device connected to cradle 200 by being connected to cradle 200 through USB port 134.

Cradle 200 includes processing circuitry 210, a USB connector 220, USB ports 222, 224, and 226, and a video connector 228.

Processing circuitry 210 performs processing or the like for exchanging data with information processing apparatus 100. Processing circuitry 210 may perform processing for exchanging data with a device connected through the wire to USB connector 220, USB ports 222, 224, and 226, and video connector 228. Processing circuitry 210 may operate as a USB hub. Processing circuitry 210 may include one or more processors, one or more memories, and one or more storages.

USB connector 220 is mainly used for connection between information processing apparatus 100 and cradle 200. USB port 134 of information processing apparatus 100 may be a female connector and USB connector 220 of cradle 200 may be a male connector.

USB ports 222, 224, and 226 are used for wired connection between cradle 200 and one or more devices.

Video connector 228 is an interface for output of a video signal to a device. Cradle 200 may output an audio signal to a monitor 300 in addition to the video signal. At this time, video connector 228 is also an interface for output of an audio signal to a device. Video connector 228 may be in conformity, for example, with HDMI^{®}, DisplayPort, Thunderbolt^{®}, or the like. Monitor 300 is an exemplary device and can also be defined as the external display.

Information processing system 1 can show video images on at least one of display 128 of information processing apparatus 100 and monitor 300. For example, in the portable mode, video images may be shown on display 128, and in the stationary mode, video images may be shown on monitor 300.

In a modification, information processing apparatus 100 may include one or more built-in cameras. A lens of the built-in camera may partially be exposed at the housing of information processing apparatus 100.

In a modification, information processing apparatus 00 may include an input portion (for example, a game controller, a button, a cross-shaped key, a keyboard, a mouse, and the like) that accepts a user operation. The input portion may be located at the housing or the like of information processing apparatus 100 or may be separable from information processing apparatus 100.

In a modification, information processing apparatus 100 may include a video port which is an interface for output of at least one of a video signal and an audio signal.

Though Fig. 1 exemplifies a configuration in conformity with USB standards as the interface for wired connection of a device, without being limited as such, any interface can be employed.

### [B. Device]

A device to be connected to information processing apparatus 100 or cradle 200 will now be described.

Information processing apparatus 100 includes an interface to and from which a device is connectable through the wire and disconnectable, in addition to a permanently connected device. When information processing apparatus 100 is placed in cradle 200, information processing apparatus 100 can also use a device connected to cradle 200 as a device connected to information processing apparatus 100. Therefore, information processing apparatus 100 can use various devices. For example, examples of devices associated with input and output of a sound and video images can be as below. A "standard device" in a list below will be described later.

### (1) Sound Output destination (Speaker)

- <Standard Device> Speaker 122 of information processing apparatus 100
- <Standard Device> The earphone, the headphone, the headset, or the like connected through the wire to phone jack 126 of the information processing apparatus
- The earphone, the headphone, the headset, or the like connected through the wire to USB port 132 of information processing apparatus 100
- The earphone, the headphone, the headset, or the like connected through the wire to at least one of USB ports 222, 224, and 226 of cradle 200
- <Standard Device> (The speaker of) monitor 300 connected through the wire to video connector 228 of cradle 200

### (2) Sound Input Source (Microphone)

- <Standard Device> Microphone 120 of information processing apparatus 100
- <Standard Device> The microphone connected through the wire to phone jack 126 of the information processing apparatus (or a microphone function of the headset) or the like
- The microphone connected through the wire to USB port 132 of information processing apparatus 100 (or a microphone function of a web camera) or the like
- The microphone connected through the wire to at least one of USB ports 222, 224, and 226 of cradle 200 (or a microphone function of a smart speaker) or the like

### (3) Video Image Output destination (Display)

- <Standard Device> Display 128 of information processing apparatus 100
- <Standard Device> Monitor 300 connected through the wire to video connector 228 of cradle 200

### (4) Video Image Input Source (Camera)

- A camera or the like connected through the wire to USB port 132 of information processing apparatus 100
- A camera or the like connected through the wire to at least one of USB ports 222, 224, and 226 of cradle 200

The devices above are by way of example and limitation thereto is not intended. For example, in an example where yet another device is connected to the device connected to information processing apparatus 100 or cradle 200, that another device may also be selected as a sound or video image output destination or a sound or video image input source.

For example, a game controller connected through the wire or wirelessly to information processing apparatus 100 may include a microphone, a phone jack, a USB connector, and/or the like. A device connected to such a game controller may be selected as a sound or video image output destination or a sound or video image input source.

### [C. Standard Device]

The standard device shown in the list above may be a device connected through the wire to information processing system 1. The standard device may be a predetermined device. For example, the standard device may include at least one of speaker 122 of information processing apparatus 100 and microphone 120 of information processing apparatus 100 that are the permanently connected devices. In addition, the standard device may include display 128 of information processing apparatus 100 that is the permanently connected device. In an example where information processing apparatus 100 includes the built-in camera (an exemplary permanently connected device), the built-in camera may be set as the standard device.

The standard device may include a device connected through the wire to a predetermined interface. For example, the standard device may include at least one of the device connected through the wire to phone jack 126 and the device connected through the wire to video connector 228. The interface itself such as phone jack 126 or video connector 228 may be set as the standard device. In other words, whichever device may be connected through the wire to phone jack 126 or video connector 228, the connected device may be handled as the standard device.

In an example where the predetermined interface included in the standard device is phone jack 126, the interface may be selected as at least one of the audio signal output destination and the audio signal input source. Alternatively, in an example where the predetermined interface included in the standard device is video connector 228 in conformity with HDMI^{®}, the interface may be selected as at least one of the audio signal output destination and the video signal output destination.

The standard device may include a device configured to be disconnected in accordance with a state of information processing system 1. For example, in the portable mode, information processing apparatus 100 is unable to use a device (for example, monitor 300 or the like connected to video connector 228 of cradle 200) connected with cradle 200 being interposed. The standard device may include such a device to be disconnected in the portable mode or the stationary mode.

### [D. Priority Group]

As described above, various devices are directly or indirectly connectable to information processing apparatus 100. In the present embodiment, in connection with selection of at least one of the sound output destination, the sound input source, the video image output destination, and the video image input source, a "priority group" including one or more devices to preferentially be selected is set. The device (which will be referred to as a "priority device" below) included in the priority group is selected as the sound or video image output destination or the sound or video image input source preferentially to a device not included in the priority group. The priority device included in the priority group can freely be set. A state in which the priority group has not been set or a state in which the priority group does not include a device, although the priority group has been set, may exist.

For example, the priority group may include a group (which will be referred to as a "standard group" below) including a plurality of standard devices. In other words, one group (standard group) including a plurality of standard devices may be set as the priority group.

The priority group may include any device selected in accordance with a user operation, in addition to or instead of the standard group including the plurality of standard devices. For example, the user may set a device to be connected through the wire to at least one USB port as the priority device.

In connection with USB ports 132, 222, 224, and 226, not the interface itself (that is, the USB port itself) but a specific device connected through the wire to at least one of USB ports 132, 222, 224, and 226 may be selected as the priority device.

### [E. Processing for Selecting Input/Output Device]

A processing procedure of selection of the input/output device in information processing apparatus 100 according to the present embodiment will now be described. For the sake of convenience of description, a device selected as the sound or video image output destination or the sound or video image input source will also collectively be referred to as an "input/output device."

Information processing apparatus 100 selects an input/output device configured to output or input a signal from among one or more devices connected to information processing system 1. The input/output device may be a device capable of both of audio signal output and audio signal input, like a headset. In other words, a single input/output device may fall under both of the sound output destination and the sound input source.

In selection of the input/output device, when at least one priority device included in the priority group is connected through the wire, the connected priority device is selected as the input/output device.

A priority level or a selection rule may be set in advance among the plurality of standard devices set as the priority group. In other words, the priority level for selection may be set for the plurality of devices included in the priority group.

For example, a device (speaker) connected to phone jack 126 may be selected preferentially to speaker 122 of information processing apparatus 100 and the speaker of monitor 300. Similarly, a device (microphone) connected to phone jack 126 may be selected preferentially to microphone 120 of information processing apparatus 100. In any of the portable mode and the stationary mode, the device connected to phone jack 126 may be prioritized. In other words, the priority level highest within the priority group may be set for the device connected to phone jack 126.

Since monitor 300 is unavailable in the portable mode, speaker 122 of information processing apparatus 100 and display 128 of information processing apparatus 100 are prioritized. In the stationary mode, on the other hand, monitor 300 (the speaker and the display) may be prioritized to speaker 122 and display 128 of information processing apparatus 100. In other words, when video images are to be shown on monitor 300, information processing apparatus 100 may select monitor 300 preferentially to speaker 122 of information processing apparatus 100.

The priority level set for the plurality of priority devices included in the priority group may be predetermined (that is, fixed) or may dynamically be changed by information processing apparatus 100. Alternatively, the user may freely set or change the priority level.

In an example where the priority group is not set or an example where the priority device included in the priority group is not connected through the wire, the input/output device may be selected from among connected devices under a predetermined selection rule. For example, a most recently connected device may be selected. In other words, the highest priority level may be given to the last connected device.

"The most recently connected device" means the most recently connected device among devices that have been connected at the time when determination is made. For example, when a device A, a device B, and a device C are connected in this order and thereafter device C is disconnected, device B falls under the most recently connected device. Therefore, information processing apparatus 100 may store a history of connection of the device. The history of connection may be stored for each of sounds and video images, or may be stored for each of output and input. A predetermined number of (for example, ten) histories of connection from the most recent connection may be stored, and the history of connection preceding the predetermined number of histories of connection may sequentially be erased from an older one.

The plurality of devices may be regarded as being simultaneously connected, in such cases as connection of information processing apparatus 100 to cradle 200, return of information processing apparatus 100 from sleep, or power-on or reboot of information processing apparatus 100. In such a case, the input/output device may be selected in accordance with the priority level set in advance, from among the plurality of simultaneously connected devices.

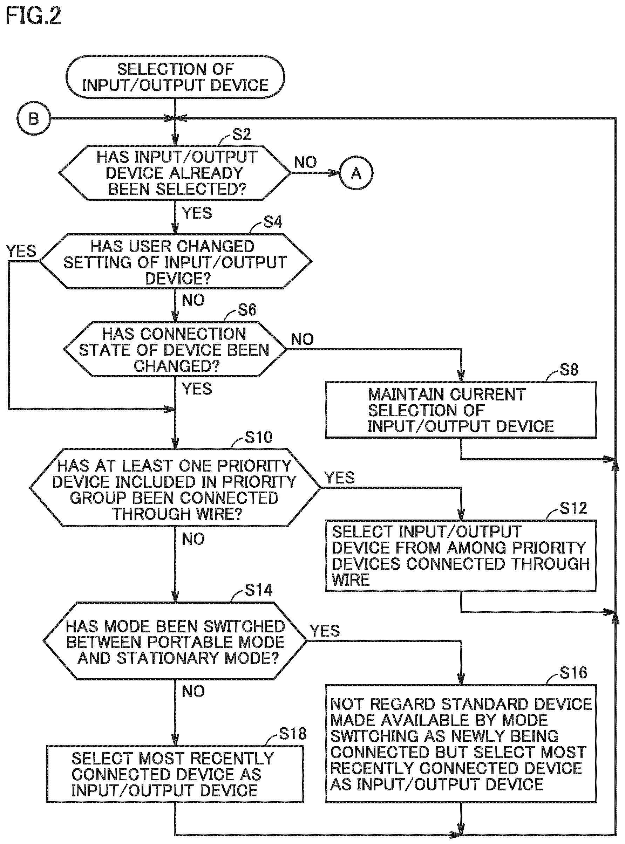

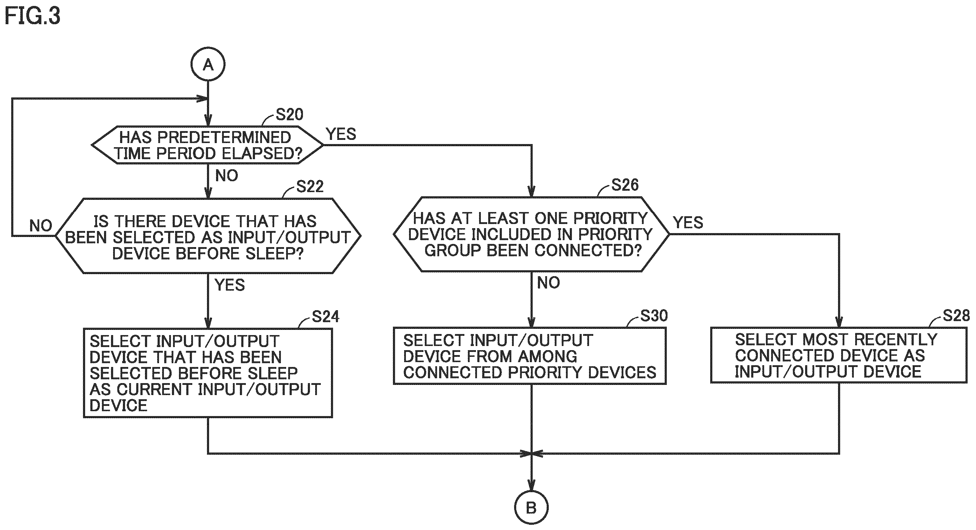

An exemplary processing procedure of selection of the input/output device in information processing apparatus 100 according to the present embodiment will be described with reference to Figs. 2 and 3. Each step shown in Figs. 2 and 3 may be performed by execution of information processing program 118 by one or more processors 112 of information processing apparatus 100. The processing procedure shown in Fig. 2 includes a processing procedure for changing the selected input/output device, and the processing procedure shown in Fig. 3 includes a processing procedure for selecting the input/output device.

Referring to Fig. 2, information processing apparatus 100 determines whether or not the input/output device has already been selected (step S2).

When the input/output device has already been selected (YES in step S2), information processing apparatus 100 determines whether or not the user has changed setting of the input/output device (step S4). Change of setting of the input/output device by the user is an operation for changing or the like of the sound or video image output destination and the sound or video image input source. As a result of change of setting of the input/output device by the user, setting of the priority group (that is, one or more priority devices) may be changed. Exemplary change of setting of the input/output device by the user will be described later.

When change of setting of the input/output device has not been made by the user (NO in step S4), information processing apparatus 100 determines whether or not a connection state of the device has been changed (step S6). Change of the connection state of the device includes connection of a new device and disconnection of at least one device.

When the connection state of the device has not been changed (NO in step S6), information processing apparatus 100 maintains current selection of the input/output device (step S8). Processing in step S2 or later is then repeated.

When the user has changed setting of the input/output device (YES in step S4) or changed the connection state of the device (YES in step S6), information processing apparatus 100 determines whether or not at least one priority device included in the priority group has been connected through the wire (step S10).

When at least one priority device included in the priority group has been connected through the wire (YES in step S10), information processing apparatus 100 selects the input/output device from among the priority devices connected through the wire (step S12). In such a case where the plurality of priority devices are connected through the wire or the like, the priority device may be selected as the input/output device in accordance with the priority level. Processing in step S2 or later is then repeated.

When the one or more devices connected through the wire to information processing system 1 include one or more devices in the priority group, information processing apparatus 100 thus selects at least one of the one or more devices in the priority group as the input/output device.

When none of the priority devices included in the priority group has been connected through the wire (NO in step S10), information processing apparatus 100 determines whether or not a mode has been switched between the portable mode and the stationary mode (step S14).

When the mode has been switched (YES in step S14), information processing apparatus 100 does not regard the standard device that has become available as a result of mode switching as not newly being connected but selects the most recently connected device as the input/output device (step S16). Processing in step S2 or later is then repeated.

The number of selectable standard devices may increase or decrease as a result of mode switching. In an example where a plurality of standard devices have been set as the priority group immediately before mode switching, the input/output device is selected in accordance with the priority level among the standard devices, and hence selection of the input/output device may be changed with increase or decrease in number of standard devices. For example, when switching from a state in which speaker 122 of information processing apparatus 100 has been selected as the sound output destination to the stationary mode is made in the portable mode, monitor 300 may be selected as the sound output destination. If the priority level highest within the priority group is set for phone jack 126, selection of the device connected to phone jack 126 is maintained in spite of mode switching.

When the mode has not been switched (NO in step S14), information processing apparatus 100 selects the most recently connected device as the input/output device (step S18). Processing in step S2 or later is then repeated.

Referring to Fig. 3, when the input/output device has not yet been selected (NO in step S2), information processing apparatus 100 determines whether or not a predetermined time period (for example, two seconds) has elapsed (step S20).

When the predetermined time period has not elapsed (NO in step S20), information processing apparatus 100 determines whether or not there is a device that has been selected as the input/output device before sleep (step S22). When there is no device that has been selected as the input/output device before sleep (NO in step S22), processing in step S20 or later is repeated.

When there is a device that has been selected as the input/output device before sleep (YES in step S22), information processing apparatus 100 selects the input/output device that has been selected before sleep as the current input/output device (step S24). Processing in step S2 or later is then repeated.

Processing in steps S20 to S24 is performed for efficiently searching for a device. For example, information processing apparatus 100 may search for all connected devices (or devices that are not connected) at the time of return from sleep and then select the input/output device. Since it takes time to search for all devices, information processing apparatus 100 stores the input/output device that has been selected before sleep (and also the USB port to which the input/output device has been connected, as necessary) and immediately selects the input/output device that has been selected if there is such an input/output device at the time of return.

When the predetermined time period has elapsed (YES in step S20), information processing apparatus 100 performs processing in step S26 or later. Specifically, after processing for searching for the input/output device that has been selected before sleep is performed for the predetermined time period, information processing apparatus 100 determines whether or not at least one priority device included in the priority group has been connected (step S26).

When at least one priority device included in the priority group has been connected (YES in step S26), information processing apparatus 100 selects the input/output device from among the connected priority devices (step S28). In such a case where the plurality of priority devices are connected or the like, the priority device is selected as the input/output device in accordance with the priority level. Processing in step S2 or later is then repeated.

When none of the priority devices included in the priority group has been connected (NO in step S26), information processing apparatus 100 selects the most recently connected device as the input/output device (step S30). Processing in step S2 or later is then repeated.

In order to avoid selection of the priority device as the input/output device in step S12 after selection of the device which is not the priority device as the input/output device in step S24, processing in step S22 and step S24 may be performed only when the device that has been selected as the input/output device before sleep is the priority device.

Processing in step S20 or later may be performed also at the time other than the time of return from sleep. At the time other than return from sleep, information processing apparatus 100 has not stored the input/output device that had been selected before sleep. Therefore, information processing apparatus 100 determines in step S22 that there is no device that has been selected as the input/output device before sleep.

If information processing apparatus 100 is able to store the input/output device that has been selected, for example, before cut-off of power, without being limited to and instead of before sleep, processing in step S20 or later may be performed based on the input/output device that has been selected before cut-off of power.

Though the device is denoted as the "input/output device" in Figs. 2 and 3 for the sake of convenience of description, in the present embodiment, at each of the sound and video image output destination and the sound and video image input source, processing for selecting the device shown in Figs. 2 and 3 is performed. For example, processing for selecting the device which is the sound output destination and processing for selecting the device which is the sound input source are performed separately from each other. The device may be capable only of input or only of output, or may be capable of both of them. By way of example, in an example where a headset capable of sound output and sound input is connected, the headset may be selected as a sound input source device, whereas the headset may not be selected as a sound output destination device. In a modification, in an example where a certain device is capable of input and output, processing may be performed either to select the device as an input source and output destination device or to select the device neither as the input source nor the output destination.

In a modification, instead of processing for selecting the most recently connected device as the input/output device (steps S16, S18, S30, and the like), the input/output device may be selected in accordance with a predetermined priority level. For example, a device may be searched for in the order of a built-in device (permanently connected device), a device connected to the USB port of information processing apparatus 100, and a device connected to the USB port of cradle 200, and the first found device may be selected as the input/output device. Alternatively, a device name of the connected device may be searched for in the alphabetical order or in the order of an identification number of the device, and the first found device may be selected as the input/output device.

### [F. Change of Setting of Input/Output Device]

An exemplary user interface screen involved with change of setting of the input/output device in information processing apparatus 100 according to the present embodiment and exemplary change (step S4 in Fig. 2) of setting of the input/output device by the user will now be described.

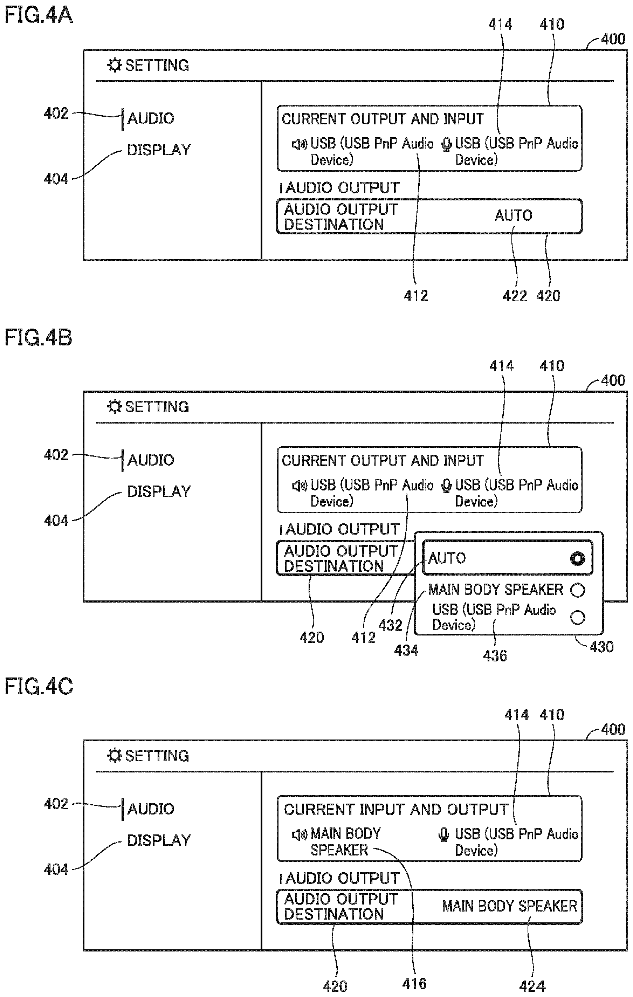

Referring to Fig. 4A, a user interface screen 400 includes an item 402 for selection or the like of the sound output destination and the sound input source and an item 404 for selection or the like of the video image output destination and the video image input source. In Fig. 4A, item 402 is selected.

User interface screen 400 includes a frame 410 for showing the currently selected output destination and input source and a frame 420 for setting the priority group. User interface screen 400 may include a frame (audio input source) for setting the sound input source (microphone). In user interface screen 400, when item 404 is selected, a frame or the like for selection of the video image output destination and the video image input source may be shown.

In frame 410, text 412 indicating the currently selected sound output destination (speaker) is shown together with a speaker icon and text 414 indicating the sound input source (microphone) is shown together with a microphone icon. In Fig. 4A, a device connected to the USB port (USB PnP Audio Device) is set as both of the sound output destination and the sound input source. A specific product name of the device may be shown.

In frame 420, text 422 indicating the priority group currently set as the sound output destination (speaker) is shown. In Fig. 4A, "auto" is shown as text 422. In the present embodiment, "auto" refers to a state in which no priority group has been set. In the present embodiment, in this state, it is determined that no priority device is connected (step S10 in Fig. 2 and step S26 in Fig. 3). Therefore, a rule to select the most recently connected device is applied as the rule to select the device. In other words, USB PnP Audio Device is the most recently connected device and selected as the sound output destination.

Referring to Fig. 4B, when the user selects frame 420, a list 430 showing candidates for the priority group at the sound output destination is shown. In list 430, three items 432, 434, and 436 are shown. The user selects a target item by selecting a corresponding radio button. For example, upon selection of a "main body speaker," the main body speaker is set as the priority device as will be described later and set as the sound output destination. Upon selection of "USB PnP Audio Device," on the other hand, the device is set as the priority device, however, the sound output destination remains the same.

As shown in Figs. 4A to 4C, the item is labeled as the "audio output destination." It may be difficult for the user to understand the concept of the priority group or the priority device. Then, based on selection by the user of the device, output to which is currently desired, that device is set as the priority device and selected as the output destination device. Then, without confusion of the user, a current request by the user can be met and the user's intention at the time of insertion and removal of the device next time or later can be achieved.

When there is no set priority device, item 432 indicating "auto" in list 430 may be selected by default.

When item 434 indicating the "main body speaker" is selected, information processing apparatus 100 sets the standard group including a plurality of standard devices as the priority group. Information processing apparatus 100 thus sets the standard group including the plurality of standard devices as the priority group, based on the user operation.

The "main body speaker" means speaker 122 (built-in speaker) of information processing apparatus 100. Speaker 122 is the standard device. In the present embodiment, as a result of selection of a single standard device, the standard group including also other standard devices may be set as the priority group. In the present embodiment, the standard group for the sound output destination includes speaker 122, a device connected to phone jack 126, and a device connected to video connector 228 of cradle 200. Information processing apparatus 100 may thus show at least one of the plurality of standard devices included in the standard group as the item selectable by the user, and set the standard group as the priority group when the user selects at least one shown standard device. As shown in Fig. 4B, among the plurality of standard devices included in the standard group, a single standard device may be shown and other standard devices do not have to be shown. For example, in the stationary mode, item 434 included in list 430 may show "television" or the product name or the like of "television," rather than the "main body speaker." In the present embodiment, regardless of the state of information processing apparatus 100, an item always indicating at least one standard device may be included in list 430.

User interface screen 400 shown in Fig. 4C shows a state after the standard group including the plurality of standard devices is set as the priority group in Fig. 4B and thereafter processing (steps S10 and S12 in Fig. 2) for selecting the input/output device is performed. For example, the sound output destination has been changed to speaker 122. Consequently, in frame 410, text 416 "main body speaker" indicating selected speaker 122 is shown together with the speaker icon.

As the user performs operations as shown in Figs. 4A to 4C, each of the sound input source, the video image output destination, and the video image input source is set or changed.

The user is not explicitly notified of change of setting of the priority group in the user interface screen shown in Figs. 4A to 4C. In a modification, however, the user may explicitly be notified of the change.

In the user interface screen shown in Figs. 4A to 4C, the user may be caused to explicitly select one or more devices to be set as the priority group. The user may freely set a plurality of devices to be included in a single priority group. The user may set the priority level among the plurality of devices. Alternatively, the user may set a plurality of priority groups, and may select a single priority group to be used for processing for selecting the device from the priority group. A user interface screen, a setting menu, or the like for such setting or selection may be provided.

### [G. Wireless Connection]

A form of connection between the device and information processing apparatus 100 or cradle 200 may be wireless connection.

Information processing apparatus 100 may include one or more interfaces for wireless connection of a device. For example, a wireless module 130 (see Fig. 1) mediates wireless connection between information processing apparatus 100 and one or more devices. Wireless module 130 may be adapted to a wireless network in conformity, for example, with Bluetooth^{®}, ZigBee^{®}, wireless LAN (IEEE 802.11), or the like.

Similarly, cradle 200 may include a wireless module which is an interface for wireless connection of a device.

Examples of the device to wirelessly be connected to information processing apparatus 100 or cradle 200 include devices as below.
- The earphone, the headphone, the headset, or the like wirelessly connected via wireless module 130 of information processing apparatus 100
- The microphone wirelessly connected via wireless module 130 of information processing apparatus 100 (or the microphone function of the headset) or the like
- The camera or the like wirelessly connected via wireless module 130 of information processing apparatus 100

When there is a wirelessly connected device, information processing apparatus 100 may select the wirelessly connected device as the input/output device, without being affected by setting or the like of the priority group. In other words, if one or more devices are wirelessly connected to information processing system 1, information processing apparatus 100 may select at least one of the one or more wirelessly connected devices as the input/output device, regardless of the devices included in the priority group. For example, information processing apparatus 100 may select the wirelessly connected device as the input/output device by handling the device as the priority device while the device is wirelessly connected, or may forcibly select the wirelessly connected device as the input/output device independently of the priority device.

By way of example, when a wirelessly connectable device is configured to support only one of the sound output destination, the sound input source, the video image output destination, and the video image input source, selection of the wirelessly connectable device as the input/output device may agree with the user's intention. For example, a camera that performs a video image input function and a sound input function and a sound output function or a headset that performs a sound input function and a sound output function is connectable to the USB port, however, the user may not have the intention to use at least one of these functions. When the function available by wireless connection is limited to the single function as above, possibility that the user has no intention to use the function is low. A device may wirelessly be connectable as a plurality of input/output destinations among the sound output destination, the sound input source, the video image output destination, and the video image input source.

In an example where a plurality of devices are wirelessly connected, the most recently connected device among the wirelessly connected devices may be selected as the input/output device, or as the input/output device in accordance with the priority level among the wirelessly connected devices. Even when devices connectable via wireless module 130 of information processing apparatus 100 are not restricted, the wirelessly connected device may be selected on a top priority basis.

### [H. Modification]

In the embodiment above, the standard group including a plurality of standard devices is set and the standard group can be set as the priority group. Then, at least one standard device is selected as the input/output device from the standard group. In internal processing, the standard group including the plurality of standard devices does not have to directly be set as the priority group. For example, in internal processing, a single standard device may be set as the priority device, whereas a single device may be selected as the standard device in the state of information processing apparatus 100 from among predetermined standard device candidates. In such a case as well, the single group including the plurality of devices can be regarded as being set as the priority group.

In an example where a game controller connected to information processing apparatus 100 through a wire or wirelessly includes a phone jack, a USB connector, or the like, a method of selecting an earphone or a headset connected via the same is not limited. For example, similarly to other devices that are connected through the wire, a device connected as such may be handled as the priority group. The device connected as such may or may not be included in the standard group. Alternatively, similarly to the wirelessly connected device, the device connected as such may be selected as the input/output device without being affected by setting or the like of the priority group. Alternatively, the device connected as such may be selected as the input/output device under a rule different from that for the device connected through the wire or the wirelessly connected device that is described in the embodiment.

Though an example in which processing is performed with the device connected through the wire and the wirelessly connected device being distinguished from each other is described in the embodiment above, the device connected through the wire and the wirelessly connected device may be handled without being distinguished from each other. For example, the wirelessly connected device may be set as the priority device. In an example where the priority group includes one or more priority devices that are connected through a wire and one or more wirelessly connected priority devices, the input/output device may be selected in accordance with the priority level within the priority group. Not wireless module 130 itself which is the interface but a specific device wirelessly connected to wireless module 130 may be selected as the priority device.

Information processing system 1 may be configured only with information processing apparatus 100, or information processing apparatus 100 may be connectable to a device different from cradle 200.

Information processing apparatus 100 may use an external resource such as a server other than information processing apparatus 100 to perform the processing according to the present embodiment.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A method to be performed in an information processing system (1) comprising an interface (124, 126; 132; 222; 224; 226; 228) to and from which a device configured to output or input a signal of at least one of a sound or video images is connectable and disconnectable, the method comprising:
setting (420, 430) as a priority group, based on a user operation, one group comprising a plurality of devices to be connected through a wire to the information processing system; and
selecting (S12; S16; S18; S24; S28; S30) an input/output device configured to output or input the signal from among one or more devices connected to the information processing system, wherein
the selecting the input/output device comprises selecting (S12; S28), when the one or more devices connected through the wire to the information processing system include one or more devices in the priority group, at least one of the one or more devices in the priority group as the input/output device.

2. The method according to claim 1, wherein
the plurality of devices are predetermined devices.

3. The method according to claim 2, wherein
the plurality of devices comprise a permanently connected device.

4. The method according to claim 2 or 3, wherein
the plurality of devices comprise a device to be connected to a predetermined interface to which a device is connectable through a wire and disconnectable.

5. The method according to claim 4, wherein
the signal is an audio signal, and
the predetermined interface is a phone jack (126).

6. The method according to claim 5, wherein
for the devices in the priority group, a priority level for selection is set, and
for a device to be connected to the phone jack, a priority level highest within the priority group is set.

7. The method according to any of claims 2 to 6, wherein
the plurality of devices comprise a device configured to be disconnected in accordance with a state of the information processing system.

8. The method according to any of claims 1 to 7, wherein
the information processing system is configured to show video images at a built-in display and a connected external display,
the signal is an audio signal,
the selecting the input/output device comprises selecting an input/output device configured to output the audio signal, and
the one group comprises a built-in microphone and the external display.

9. The method according to any of claims 1 to 8, wherein
for the devices in the priority group, a priority level within the priority group for selection is set.

10. The method according to any of claims 2 to 7, wherein
the setting the one group as the priority group comprises
showing as an item selectable by a user, at least one device of the plurality of devices in the one group, and
setting the one group as the priority group when the user selects the at least one device that is shown.

11. The method according to claim 10, wherein
the setting the one group as the priority group comprises showing one device and not showing other one or more devices among the plurality of devices in the one group.

12. The method according to claim 8, wherein
the setting the one group as the priority group comprises causing a user to select a device configured to currently output or input the signal and setting a group comprising the selected device as the priority group.

13. The method according to any of claims 1 to 12, wherein
the selecting the input/output device comprises selecting, when one or more devices are wirelessly connected to the information processing system, at least one of the one or more wirelessly connected devices as the input/output device, regardless of the devices in the priority group.

14. An information processing system (1) configured to perform the method according to any of claims 1 to 13.

15. A program (118) causing one or more computers to perform the method according to any of claims 1 to 13.
